# EUROPEAN PATENT APPLICATION

(11) **EP 4 672 545 A1**
(43) Date of publication of application: **31.12.2025**
(21) Application number: 24185258.1
(22) Date of filing: 28.06.2024
(51) Int. Cl.: H02J 7/00

(54) **BATTERY MODULE**

(71) Applicant: Nicoventures Trading Limited, London WC2R 3LA (GB)
(72) Inventor: POYNTON, Simon, 1 Water Street, London, WC2R 3LA (GB); BRUTON, CONNOR, 1 Water Street, London, WC2R 3LA (GB)
(74) Representative: Whiting, Gary

(57) **Abstract**

A battery module is described that is connectable to an aerosol provision device for generating aerosol. The battery module comprises a battery (for providing electrical power to the aerosol provision device), a data storage medium, and a controller (configured to obtain and store battery data in the data storage medium).

## Description

### Technical Field

The present specification relates to a battery module.

### Background

The present specification relates to a battery module, for example to a battery module for providing electrical power to an aerosol generator of an aerosol provision device (such as an e-cigarette or similar device).

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

In a first aspect, this specification describes a battery module connectable to an aerosol provision device for generating aerosol, the battery module comprising: a battery for providing electrical power to the aerosol provision device; a data storage medium; and a controller configured to obtain and store battery data (e.g. battery usage data) in the data storage medium. The battery module may be removable or replaceable.

In some example embodiments, the controller is configured to receive some or all of said obtained battery data from the aerosol provision device when the battery module is connected to said aerosol provision device.

In some example embodiments, the controller is configured to provide stored battery data to the aerosol provision device when the battery module is connected to said aerosol provision device.

The battery module may further comprise one or more sensors, wherein at least some of said battery data is obtained from one or more of said one or more sensors. The said one or more sensors may include a pressure sensor for obtaining pressure measurements indicative of battery swelling, and wherein the battery data comprises said pressure measurements.

The battery module may further comprise a conductor couplable to a corresponding conductor on the aerosol provision device for providing said electrical power to the aerosol provision device.

The said battery data may, for example, comprise one or more of: a state of charge of the battery; a maximum capacity of the battery; state of health data for the battery; a battery end of life metric; battery-aerosol provision device pairing information; heating session data; number of charging sessions; charge time data; Coulomb register data; and session data for one or more charging sessions and/or aerosol generating sessions.

The controller may configured to activate or deactivate said battery module based, at least in part, on said battery data. Alternatively, or in addition, the controller may be configured to derate performance of the battery (e.g. in order to seek to extend battery life) based, at least in part, on said battery data. In some example embodiments, the derating of the battery is carried out before the battery is deactivated.

In a second aspect, this specification describes an aerosol provision system a battery module as set out above with respect to the first aspect and further comprising said aerosol provision device for generating aerosol.

In a third aspect, this specification describes an aerosol provision device for generating aerosol, the aerosol provision device being connectable to a battery module, the battery module comprising a battery and a data storage medium storing battery data, wherein the aerosol provision device is configured to receive electrical power from the battery of the battery module, and wherein the aerosol provision device comprises: a controller configured to obtain at least some of said battery data from the battery module. The controller may be configured to activate or deactivate said battery module based, at least in part, on said battery data. Alternatively, or in addition, the controller may be configured to derate performance of the battery (e.g. in order to seek to extend battery life) based, at least in part, on said battery data. In some example embodiments, the derating of the battery is carried out before the battery is deactivated.

In a fourth aspect, this specification describes an aerosol provision system comprising an aerosol provision device as set out above with respect to the third aspect and a battery module as set out above with respect to the first aspect, wherein the battery module is replaceably attached to the aerosol provision device.

In a fifth aspect, this specification describes a method comprising: obtaining, by a controller of a battery module, battery data relating to said battery module, wherein the battery module is connectable to an aerosol provision device for generating aerosol; and storing the obtained battery data in a data storage medium of the battery module. The method may comprise providing an output based on the stored battery data in response to a request. The method may comprise determining whether to activate or deactivate the battery module based, at least in part, of the battery data.

In a sixth aspect, this specification describes a method comprising battery data from a battery module that is connectable to an aerosol provision device for generating aerosol, wherein the battery module comprises a battery and a data storage medium storing battery data. The method may comprise activating or deactivating said battery module based, at least in part, on said battery data. The method may comprise derating performance of the battery based, at least in part, on said battery data. The said de-rating may be for extended (or attempting to extend) a usage time of said battery.

In a seventh aspect, this specification describes computer-readable instructions which, when executed by a computing apparatus, cause the computing apparatus to perform (at least) any method as described herein (including the methods of the fifth or sixth aspects described above).

In an eighth aspect, this specification describes a computer-readable medium (such as a non-transitory computer-readable medium) comprising computer program instructions stored thereon for performing (at least) any method as described herein (including the methods of the fifth or sixth aspects described above).

In a ninth aspect, this specification describes an apparatus comprising: at least one processor; and at least one memory including computer program code which, when executed by the at last one processor, causes the apparatus to perform (at least) any method as described herein (including the methods of the fifth or sixth aspects described above).

In a tenth aspect, this specification describes a computer program comprising instructions which, when executed by an apparatus, cause the apparatus to: obtain battery data relating to a battery module, wherein the battery module is connectable to an aerosol provision device for generating aerosol; and store the obtained battery data in a data storage medium of the battery module.

In an eleventh aspect, this specification describes a kit of parts comprising: a battery module as set out above with respect to the first aspect; and an aerosol provision device for generating aerosol. The kit of parts may further comprise an article comprising an aerosol generating material for use in the aerosol provision device. The article may be a removable article comprising an aerosol generating material. The aerosol provision device may include a heater for heating aerosol generating material (e.g. as provided by the article). Alternatively, the article may include a heater.

### Brief Description of the Drawings

Example embodiments will now be described, by way of example only, with reference to the following schematic drawings, in which:
FIGS. 1 to 3 are block diagrams of aerosol provision systems in accordance with example embodiments;
FIG. 4 is a block diagram of a battery module in accordance with an example embodiment;
FIG. 5 is a block diagram of an aerosol provision system in accordance with an example embodiment;
FIGS. 6 to 11 are flow charts showing algorithms in accordance with example embodiments;
FIG. 12 is a block diagram of a system in accordance with an example embodiment; and
FIG. 13 is a block diagram of a processing system that may be used to implement on or more of the example embodiments described herein.

### Detailed Description

As used herein, the term "delivery system" is intended to encompass systems that deliver at least one substance to a user, and includes non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device thereof, may comprise a power source and a controller. The power source may, for example, be an electric power. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise one or more active substances and/or flavours, one or more aerosol-former materials, and optionally one or more other functional material.

The aerosol-generating material may comprise or be in the form of an aerosol-generating film. The aerosol-generating film may comprise a binder, such as a gelling agent, and an aerosol former. Optionally, a substance to be delivered and/or filler may also be present. The aerosol-generating film may be substantially free from botanical material. In particular, in some embodiments, the aerosol-generating material is substantially tobacco free.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

A susceptor is a material that is heatable by penetration with a varying magnetic field, such as an alternating magnetic field. The susceptor may be an electrically-conductive material, so that penetration thereof with a varying magnetic field causes induction heating of the heating material. The heating material may be magnetic material, so that penetration thereof with a varying magnetic field causes magnetic hysteresis heating of the heating material. The susceptor may be both electrically-conductive and magnetic, so that the susceptor is heatable by both heating mechanisms. The device that is configured to generate the varying magnetic field is referred to as a magnetic field generator, herein.

An aerosol generator is an apparatus configured to cause aerosol to be generated from the aerosol-generating material. In some embodiments, the aerosol generator is a heater configured to subject the aerosol-generating material to heat energy, so as to release one or more volatiles from the aerosol-generating material to form an aerosol. In some embodiments, the aerosol generator is configured to cause an aerosol to be generated from the aerosol-generating material without heating. For example, the aerosol generator may be configured to subject the aerosol-generating material to one or more of vibration, increased pressure, or electrostatic energy.

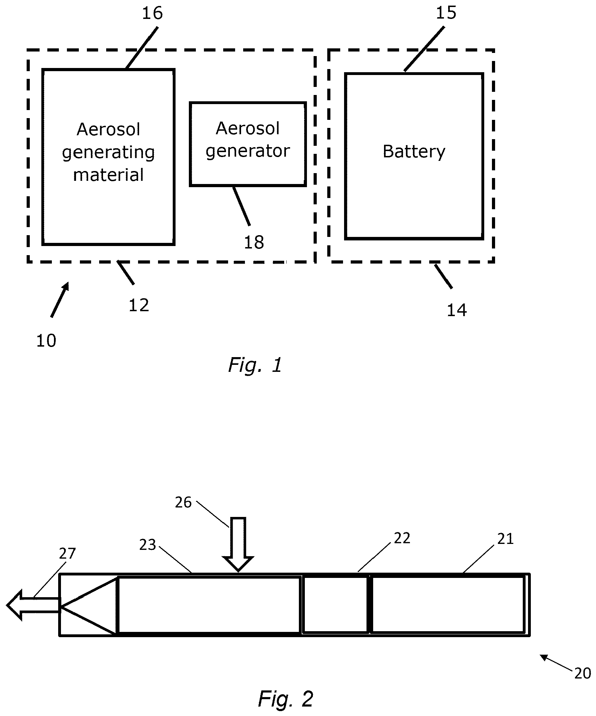

FIG. 1 is a block diagram of an aerosol provision system, indicated generally by reference numeral 10, in accordance with an example embodiment.

The aerosol provision system 10 comprises aerosol provision device 12 and battery module 14. Aerosol provision device 12 comprises aerosol generating material 16 and an aerosol generator 18. The battery module 14 comprises a battery 15 (e.g. a rechargeable battery) or some other electrochemical storage system (e.g. one or more batteries, such as Li-ion batteries or some other battery technology, such as Li-Metal, Na-ion etc.) and/or one or more supercapacitors. A controller (not shown) may be provided as part of the aerosol provision device 12, the battery module 14, or both.

The battery module 14 is reversibly (e.g., detachably) connectable to aerosol provision device 12 (such that the battery module may be removable or replaceable). For example, one or both of aerosol provision device 12 and battery module 14 may comprise a connector assembly configured to retain the battery module 14 in a position (or limited range of positions) with respect to aerosol provision device 12. The battery module 14 may, for example, be connected to the side or base of the aerosol provision device 12 or could, for example, be inserted into the device. The skilled person will be aware of many suitable configurations.

The battery 15 is configured to provide electrical power to the aerosol provision device 12 when the battery module 14 is connected to aerosol provision device 12. For example, the battery module 14 and aerosol provision device 12 may comprise corresponding electrical contacts configured to engage when the battery module 14 is connected to aerosol provision device 12 to allow electrical power to be transferred conductively from the battery 15 to the aerosol provision device 12. In other example embodiments, the battery 15 may be configured to provide power to aerosol provision device wirelessly (e.g. inductively). For example, the battery module 14 may comprise a coil which, when battery 15 is connected to aerosol provision device 12 (for example, using a connector assembly), is positioned to be inductively coupled with a corresponding coil in aerosol provision device 12 to permit wireless power transfer.

The battery 15 may be rechargeable. The battery module 14 may comprise a charging port that is accessible when battery module 14 is connected to aerosol provision device 12 (e.g., to facilitate charging while battery module 14 connected to aerosol provision device 12). In some example embodiments, the battery module 14 comprises a charging port that is inaccessible (e.g., obscured) when battery module 14 is connected to aerosol provision device 12, preventing charging using the port. In some example embodiments, battery module 14 comprises a coil for receiving power wirelessly, to facilitate wireless charging of the battery 15. The battery module 14 may additionally or alternatively have a two-way power connection with aerosol provision device 12 when the devices are connected, so that the battery 15 may be charged via a charging port or wireless charging circuit of aerosol provision device 12. The battery module 14 may have power connections (e.g. ports) that can be used to provide electrical power to the aerosol provision device 12, without charging the battery 15 (for example by locating the aerosol provision system 10 within a docking station).

When the aerosol generating material 16 is acted upon by the aerosol generator 18, an aerosol may be generated. For example, in some example embodiments the aerosol generator 18 may be a heater, and the aerosol generating material 16 may be heated by the aerosol generator to form an aerosol. In some example embodiments, the aerosol generator 18 may be a susceptor, a resistive heater, an ultrasonic transducer, some other heater, or a mechanism to generate an aerosol without heating (such as a pump, a vibration mechanism, etc.). The aerosol generating material 16 may be a film or gel. In example embodiments in which aerosol generator 18 is a susceptor, components (such as coils) which may be inductively coupled with the susceptor and driven with a suitable alternating current to heat the susceptor.

In some example embodiments, aerosol generating material 16 is retained in a consumable that is removable from aerosol provision device 12. In some example embodiments, this consumable may further include the aerosol generator, or portions of the aerosol generator. Therefore, in some embodiments, aerosol provision device 12 is connectable to a consumable comprising aerosol generating material and an aerosol generator 18 to provide aerosol. In other example embodiments, aerosol provision device 12 is connectable to a consumable comprising aerosol generating material 16.

Elements of the system 10 may be provided separately, for example as a kit of parts. An example kit of parts may include a battery module 14, an aerosol provision device for generating aerosol, and an article comprising an aerosol generating material for use in the aerosol provision device. The article may be a removable article (such as an e-cigarette stick) comprising an aerosol generating material.

FIG. 2 is a block diagram of an aerosol provision system (e.g. a non-combustible aerosol provision device), indicated generally by the reference numeral 20. The system has many similarities with the system 10 described above.

The aerosol provision system 20 comprises a battery module 21 (e.g. having a rechargeable battery), one or more control modules 22 and an aerosol generator 23. The aerosol generator 23 may comprise a resistive heater for heating an aerosolisable material (e.g. a film or a gel) to generate an aerosol (e.g. a vapour). The aerosolisable material is sometimes referred to an as aerosol generating material. It should be noted that the use of resistive heating of an aerosolisable material is described by way of example only. The principles described herein are applicable other aerosol provision systems (such as systems using induction heating).

In the use of the device 20, air is drawn into an air inlet of the aerosol generator 23, as indicated by arrow 26. An aerosol generated by the aerosol generator 23 exits the device at an air outlet, as indicated by arrow 27 (for example into the mouth of a user of the system 20).

The aerosol generator 23 may be separable from the battery module 21; such an aerosol generator may be referred to as a "consumable part". Thus, for example, in the use of the aerosol provision device 20, the consumable aerosol generator 23 may be replaced after use, with the battery module 21 being re-used with a different consumable part. The control module 22 may be part of the aerosol generator 23, the battery module 21 or both. The control module 22 could also be a separate component (e.g. separate from both the battery module 21 and the aerosol generator 23).

Alternatively, or in addition, the battery module 11 may be replaceable. Thus, for example, the aerosol generator 23 could be used with a different battery module and/or the battery module 21 may be used with a different aerosol generator.

Of course, the aerosol provision systems 10 and 20 are provided by way of example only and is highly schematic. Many variants are possible.

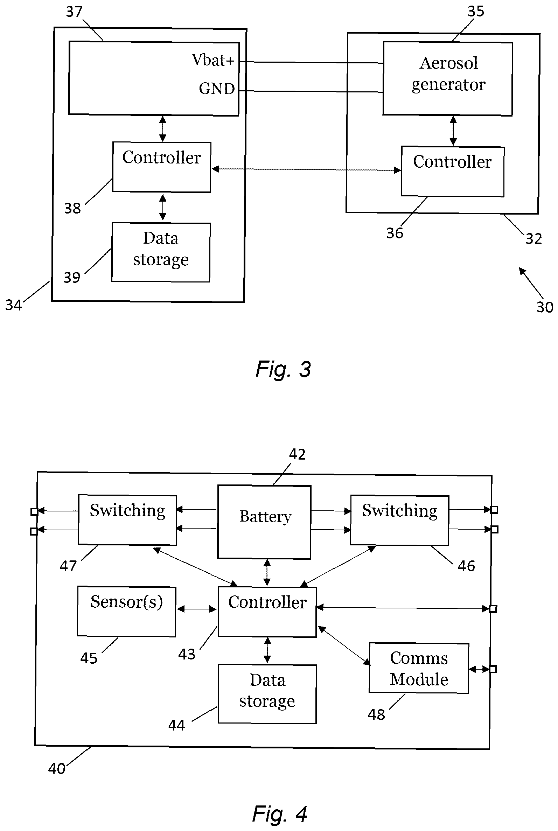

FIG. 3 is a block diagram of an aerosol provision system, indicated generally by the reference numeral 30, in accordance with an example embodiment. The system 30 comprises an aerosol provision device 32 (that has similarities with the aerosol provision devices 12 and 23) and a battery module 34 (that has similarities with the battery modules 14 and 21). Together, the aerosol provision 32 and the battery module 34 form the aerosol provision system 30. The aerosol provision device 32 and the battery pack 34 may be separable. Indeed, different battery modules may be used with the aerosol provision device 32 and the battery module 34 may be used with different aerosol provision devices.

The aerosol provision device 32 comprise an aerosol generator 35 and a controller 36. The controller 36 may be in two-way communication with the aerosol generator 35. Alternatively, the controller 36 may simply provide signals to the aerosol generator 35.

The battery module 34 comprises a battery 37, a controller 38 and data storage medium 39 (e.g. a memory device). The controller 38 may be in two-way communication with the battery 37 and may be in two-way communication with the data storage medium 39. Moreover, the controller 38 of the battery module 34 may be in two-way communication with the controller 36 of the aerosol provision device 32. In the use of the system 30, the battery 37 provides electrical power to the aerosol provision device 32 (specifically the aerosol generator 35), when the battery 37 and aerosol provision device 32 are electrically connected.

The controller 38 of the battery module 34 is configured to obtain battery data and to store obtained battery data in the data storage medium 39, as discussed in detail below. For example, the data storage medium 39 may include one or more registers for storing data under the control of the controller 38.

FIG. 4 is a block diagram of a battery module 40 in accordance with an example embodiment. The battery module 40 provides further details of an example implementation of the battery modules 14, 21 and 34 described above.

The battery module 40 comprises a battery 42, a controller 43, a data storage module 44, one or more sensors 45, a first switching module 46, a second switching module 47 and a communications module 48. Note that at least some of the modules of the battery module 40 may be omitted in some example embodiments.

The battery 42, the controller 43 and the data storage module 44 are example implementations of the battery 37, the controller 38 and the data storage medium 39 described above.

The controller 43 may be in two-way communication with one or more of the battery 42, the data storge module 44, the sensor(s) 45, the first switching module 46, the second switching module 47 and the communications module 48.

The one or more sensors 45 may be used to provide at least some battery data to the controller 43. By way of example, the sensors may include a pressure sensor for obtaining pressure measurements indicative of battery swelling, and wherein the battery data comprises said pressure measurements. A battery may be deactivated in the event that a detected degree of swelling exceeds a safe level.

Other example sensors (that could be provided in any combination, in addition to, or instead of, a pressure sensor) include: a temperature sensor, a battery fuel gauge, an altimeter, a global positioning system (GPS) device, a vibration sensor, a Bluetooth module (e.g. to enable remove activation or deactivation of the device), a relative humidity sensor, or an RFID sensor).

The data storage module 44 may have one or more registers storing one or more battery parameters (such as one or more of: a voltage level of the battery 42, a state of charge of the battery, a maximum capacity of the battery, a temperature of the battery 42, an internal resistance of the battery 42, a number of charge cycles of the battery 42, pressure reading from a pressure sensor, a state of health of the battery, a battery end of life metric (e.g. remaining usage time for the battery), identifiers of devices that the battery has been paired with, the number of heating sessions/puff (e.g. per charge, for the most recent charge and/or over the total life of the battery), number of sessions used for each device (if the battery has been used with multiple devices), total charge time (e.g. for the most recent charge and/or over the lifetime of the battery), maximum charge time for a single cycle, Coulomb register (that may be used to monitor cell degradation), etc.). Alternatively, or in addition, the data storage module may store sessions data for one or more recent sessions (e.g. the latest 100 session). Such session may include, for example, the duration of each session (e.g. in seconds) and/or the maximum battery temperature during the respective session.

The first switching module 46 is an output circuit that, in some example embodiments, selectively connects the battery 42 to a conductor that is couplable to a corresponding conductor of an aerosol provision device. Thus, the first switching module 46 can be used to determine whether electrical power can be transferred from the battery 42 to the respective aerosol provision device (such as the device 32 described above). A persistent change in the state of the first switching module 46 can be used to prevent the transfer of power of the aerosol provision device via the conductor.

Similarly, the second switching module 47 is an input circuit that, in some example embodiments, selectively connects the battery 42 to one or more terminals through which the battery 42 is chargeable. A persistent change in the state of the second switching module 47 can be used to prevent charging of the battery 42 through the one or more terminals.

The communication module 48 may, for example, enable communications with an external module, such as a mobile phone. For example, the communications module 48 may enable Bluetooth communication, or some other wireless communication, with an application installed on a user's mobile phone (or some other mobile computing device or to some other device, such as a docking station). This may enable battery information to be provided to the user. Alternatively, or in addition, battery health updates could be provided (e.g. whilst the device is in use). In some example embodiments, the device with which the communication module communicates (e.g. a mobile phone or a docking station) may be used to enable a user to provide input and/or may be used as a display to provide information to the user or consumer.

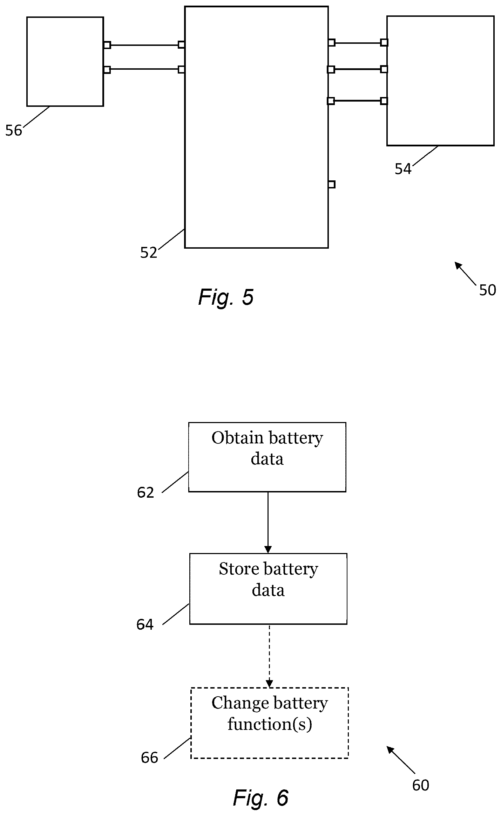

FIG. 5 is a block diagram of an aerosol provision system in accordance with an example embodiment. The system comprises a battery module 52, an aerosol provision device 54 and a power source 56. The battery module 52 may, for example, be the battery module 34 or 40 described above.

The example battery module 52 has three external connections to the aerosol provision device 54 (although more connections, e.g. 4, 5, 6, 7, 8, 9 or 10 connections etc., could be provided in some example embodiments). As shown in the battery module 40, these may be (or may include) the outputs of the first switching module 46 and the output of the controller 43. Alternatively, two electrical outputs may be provided (e.g. the outputs of the first switching module 46 of the battery module 30); this configuration may be provided if there is no mechanism to enable a controller of the battery module to communicate with the aerosol provision device over a dedicated connection.

By way of example, one example implementation includes up to six connectors as follows:
- Connector 1: positive voltage connection
- Connector 2: negative voltage connection
- Connector 3: negative temperature coefficient connection
- Connector 4: Sensor input or control input (e.g. fuel gauge)
- Connector 5: Data connection
- Connector 6: Second sensor connection.

A conductor of the battery module 52 may be provided that is couplable to a corresponding conductor on the aerosol provision device 54 to transfer electrical power from a battery of the battery module to the aerosol provision device. The persistent change discussed above may prevent the transfer of power of the aerosol provision device via the conductor. For example, an output circuit of the battery module (e.g. the first electric circuit 34 or the first switching module 46) may selectively connect the battery to the conductor.

Similarly, the battery module 52 has two external connections to the power source 56; these may be the inputs of the second switching module 47. The power source 56 may be a battery charging pack, a mains power connection, or some other power source. The external connections may provide terminals through which the battery of the battery module 52 is chargeable. The persistent change discussed above may prevent charging of the battery through the terminals. For example, an input circuit of the battery module (e.g. the second electric circuit 35 of the second switching module 47) may selectively connect the battery to the one or more terminals. In an alternative embodiment, the persistent change may allow a reduction in charge rate (e.g. allowing a high charge rate when the battery is new, a reduced charge rate (e.g. 50%, 70% or some other percentage of the high charge rate) when a first criteria is reached, and preventing charge when a second criteria (e.g. an end-of-life criteria) has been met.

The persistent change discussed above may be implemented in many different ways. These include: a change of data in a data storage medium, such as the data storage module 44 (e.g. changing a bit used in logic controlling a transistor or physical switch); a change in state of a transistor or physical switch (such as the first and second switching modules 46 and 47); and a change in state of a fuse (which may, for example, implement the switching modules 46, 47).

FIG. 6 is a flow chart showing an algorithm, indicated generally by the reference numeral 60, in accordance with an example embodiment.

The algorithm 60 starts at operation 62, where battery data relating to a battery module (such as the battery module 34, 40 or 52) is obtained by a controller of the respective battery module. For example, battery data may be obtained from the controller 36 of the aerosol generator (e.g. when the battery module is connected to said aerosol provision device) and/or from one or more sensors 45.

At operation 64, obtained battery data is stored in a data storage medium of the battery module (e.g. data storage medium 39 or data storage module 44).

At operation 66, a battery function of the battery module may be changed based, for example, on the battery data obtained in the operation 62. For example, a change in one or more circuits of the battery module (such as the first and second switching modules of the battery module 40) may be initiated. Note that in some example embodiments, the operation 66 is omitted.

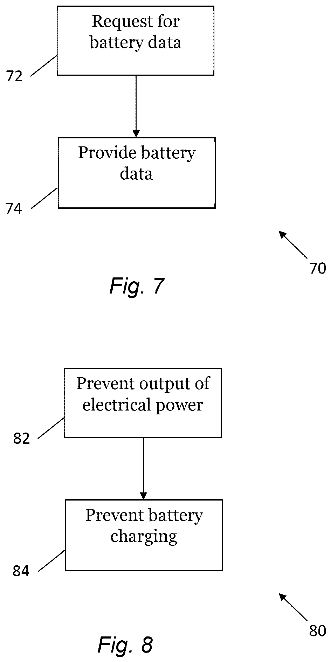

FIG. 7 is a flow chart showing an algorithm, indicated generally by the reference numeral 70, in accordance with an example embodiment.

The algorithm 70 starts at operation 72, where a request for battery data is obtained. The request may be received at a controller of a battery module (e.g. the controller 38 or 43), for example from an aerosol provision device that is being used with the battery module (e.g. from the controller 36) or from an associated computing device or application (e.g. via the communication module 48).

At operation 74, the requested battery data is output in response to the request.

The battery data may be provided (in the operation 74) to the respective aerosol provision device when the battery module is connected to said aerosol provision device. Indeed, battery data may be provided to the respective aerosol provision device when the battery module is connected to said aerosol provision device without waiting for a request to do so (i.e. omitted the operation 72).

As noted above, the operation 72 may be implemented at a controller of an aerosol provision device that is configured to obtain at least some of said battery data from the battery module. In some example embodiments, the controller of the aerosol provision device may be configured to activate or deactivate the respective battery module based, at least in part, on said battery data.

FIG. 8 is a flow chart showing an algorithm, indicated generally by the reference numeral 80, in accordance with an example embodiment. The algorithm 70 may be used to implement the operation 66 of the algorithm 60.

At operation 82, the transfer of electrical power from the battery module to a connected aerosol provision device is prevented (for example based, at least in part, on battery data obtained in the operation 62). The operation 82 may be implemented by causing a persistent change in the first switching module 46, or some similar circuit.

At operation 84, charging of a battery of the battery module is prevented (for example based, at least in part, on battery data obtained in the operation 62). The operation 84 may be implemented by causing a persistent change in the second switching module 47 or some similar circuit.

Thus, the algorithm 80 can be used to make a removable battery module of an aerosol provision device inoperable (e.g. by preventing charging and/or discharging of relevant battery), so that an aerosol provision device that has a battery that has reached an end-of-life condition may be reused with a different battery, and so that a battery that has reached an end-of-life condition can be prevented from being reused with a different aerosol provision device. Example end-of-life (EOL) conditions include: a fixed number of charge cycles of the battery, a maximum temperature threshold being reached/exceeded, a signal from one or more sensors (e.g. a pressure sensor or a fuel gauge) being received, etc.

In some example embodiments, only one of the operations 82 and 84 is implemented. In other example embodiments, both of the operations 82 and 84 can be implemented. In yet other embodiments, the operation 66 (and hence the algorithm 80) are omitted entirely.

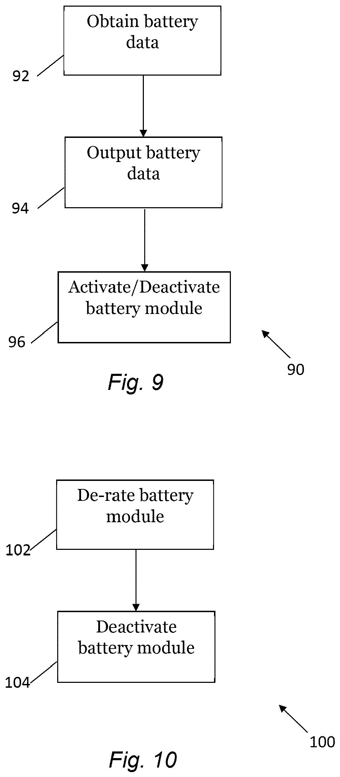

FIG. 9 is a flow chart showing an algorithm, indicated generally by the reference numeral 90, in accordance with an example embodiment. The algorithm 90 may be implemented by a controller of a battery module (such as the controller 38 or the controller 43), the controller of an aerosol provision device (such as the controller 36) or a combination therefore (or indeed elsewhere).

The algorithm 90 starts at operation 92, where battery data relating to a battery module (such as the battery module 34, 40 or 52) is obtained by (or from) a controller of the respective battery module. For example, battery data may be obtained from the controller 36 of the aerosol generator (e.g. when the battery module is connected to said aerosol provision device) and/or from one or more sensors 45.

At operation 94, battery data is output in some way, for example using a user-perceivable display. For example, battery data may be provided (e.g. via Bluetooth) to a mobile phone of the user.

At operation 96, a decision is taken to activate or deactivate the battery module. The decision may be taken at a controller of the battery module, at a controller of the aerosol provision device, or elsewhere (e.g. at a processor a user device).

Note that in some example embodiments, one or more of the steps of the algorithm 90 may be omitted.

FIG. 10 is a flow chart showing an algorithm, indicated generally by the reference numeral 100, in accordance with an example embodiment. The algorithm 100 is an example implementation of the operation 66 of the algorithm 60 or the operation 96 of the algorithm 90 described above. The algorithm 100 may be implemented by a controller of a battery module (such as the controller 38 or the controller 43), the controller of an aerosol provision device (such as the controller 36) or a combination thereof (or indeed elsewhere).

The algorithm 100 starts at operation 102, where a relevant controller derates the performance of the respective battery based, at least in part, on battery data. For example, battery performance may be de-rated based on battery data obtained in the operation 62 of the algorithm 60 or the operation 92 of the algorithm 90. The battery may be de-rated in an attempt to extend battery usage time.

At operation 104 of the algorithm 100, the relevant controller deactivates the respective battery module.

In some example embodiments, as a battery is used, the battery may first be de-rated (operation 102) before later being deactivated (operation 104). This provides a stepwise process for deactivating the respective battery module.

A battery module in accordance with the principles described herein (such as the battery module 34 or the battery module 40) may include a mechanical connector assembly connectable to a corresponding mechanical connector assembly on an aerosol provision device to removably retain the battery module in a position with respect to the aerosol provision device. The position in which the connector assembly retains the battery module is a position in which the conductor of the battery module is coupled with the conductor of the aerosol provision device. The conductor may comprise a terminal engageable with a terminal of the corresponding conductor of the aerosol provision device to form a direct electrical connection between the respective conductors, however this is not essential to all example embodiments. For example, the conductor may comprise a coil inductively couplable with a coil of the corresponding conductor of the aerosol provision device.

The principles described herein enable usage of a battery (e.g. consumer usage) to be collected (e.g. in addition collecting usage data of a particular aerosol provision device). Battery usage data can be particularly useful if the battery is used across multiple devices.

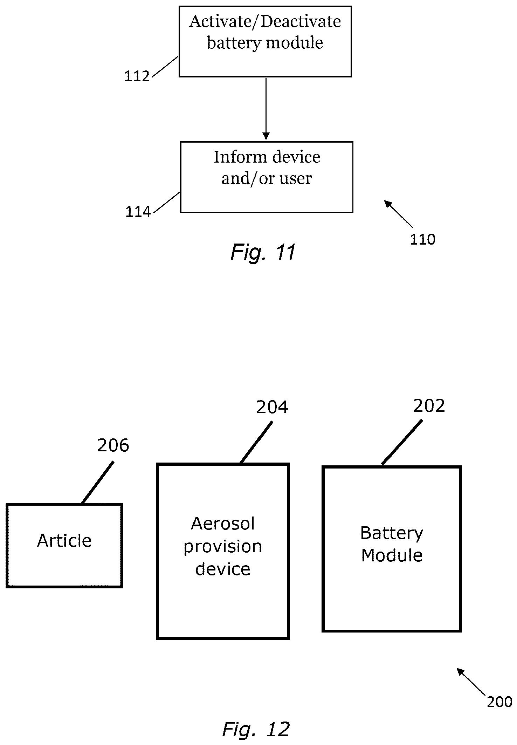

FIG. 11 is a flow chart showing an algorithm, indicated generally by the reference numeral 110, in accordance with an example embodiment. The algorithm 110 may be implemented by a controller of a battery module (such as the controller 43), the controller of an aerosol provision device (such as the controller 22) or a combination therefore (or indeed elsewhere).

The algorithm 110 starts at operation 112, where a decision is taken to activate or deactivate the battery module. The operation 112 is an example implementation of the operation 64 of the algorithm 60 (where the battery function is changed).

At operation 114, an output is provided to a device and/or a user informing the device/user of the outcome of the operation 112.

The operation 114 enables a consumer to be informed that a battery has been activated. Examples methods of implementing the operation 114 include:
- Enabling the battery to provide a small amount of power to a device together with a warning message (e.g. "battery disabled") that can be displayed by the device.
- Sending a message (e.g. using the communications module 48) to an external device (e.g. to a user's mobile phone) to enable a message (such as "battery disabled") to be displayed to the user.
- Allowing the battery to be charged to a limited degree, to provide sufficient power to enable a display message to be display of a device screen or on a display of the battery module.

The skilled person will be aware of other methods for implementing the operation 114.

Of course, at least some of the features of the algorithms described above with reference to FIGS. 6 to 11 may be combined in some example embodiments.

FIG. 12 is a block diagram of a system, indicated generally by the reference numeral 200, in accordance with an example embodiment. The system 200 comprises a battery module 202 (such as any of the battery modules described above), an aerosol provision device 204 for generating aerosol, and an article 206. The elements of the system 200 may be provided separately as a kit of parts.

The article 206 may comprise an aerosol generating material for use in the aerosol provision device 204. The article 206 could take the form of a stick (e.g. an e-cigarette) or a pod.

The aerosol provision device may include a heater for heating aerosol generating material (e.g. as provided by the article 206). Alternatively, the article may include a heater. In some example embodiments, the article 206 is omitted entirely (e.g. the aerosol provision device may include aerosol generating material; thus, a kit of parts may be provided with just the battery module 202 and the aerosol provision device 206.

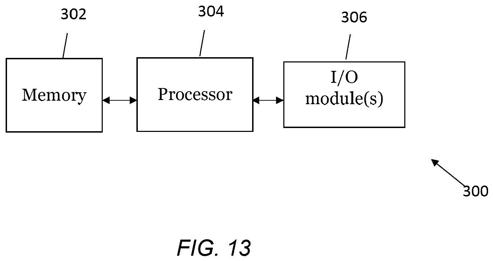

FIG. 13 is a block diagram of a processing system, indicated generally by the reference numeral 300, that may be used to implement one or more of the example embodiments described previously. The processing system 300 may, for example, be (or may include) the apparatus referred to in the claims below.

The processing system 300 may have a processor 304, a memory 302 coupled to the processor (e.g. comprising a random access memory (RAM) and/or a read only memory (ROM)). The processing system 300 may also comprise one or more input/output (I/O) modules 306, such as one or more user interface modules.

The memory 302 may comprise code which, when executed by the processor 304 implements aspects of the methods and algorithms described herein.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc., other than those specifically described herein. In addition, this disclosure may include other inventions not presently claimed, but which may be claimed in future. For example, although the embodiments described herein comprise non-combustible aerosol provision devices, this is not essential to all example embodiments. The principles described herein may be applied to aerosol provision devices including combustion (either in addition to, or instead of, non-combustible aerosol generation).

## Claims

1. A battery module connectable to an aerosol provision device for generating aerosol, the battery module comprising:
a battery for providing electrical power to the aerosol provision device;
a data storage medium; and
a controller configured to obtain and store battery data in the data storage medium.

2. A battery module as claimed in claim 1, wherein said battery data comprises battery usage data.

3. A battery module as claimed in claim 1 or claim 2, wherein the controller is configured to receive some or all of said obtained battery data from the aerosol provision device when the battery module is connected to said aerosol provision device.

4. A battery module as claimed in any one of claims 1 to 3, wherein the controller is configured to provide stored battery data to the aerosol provision device when the battery module is connected to said aerosol provision device.

5. A battery module as claimed in any one of claims 1 to 4, further comprising one or more sensors, wherein at least some of said battery data is obtained from one or more of said one or more sensors.

6. A battery module as claimed in any one of claims 1 to 5, further comprising a conductor couplable to a corresponding conductor on the aerosol provision device for providing said electrical power to the aerosol provision device.

7. A battery module as claimed in any one of claims 1 to 6, wherein said battery data comprises one or more of:
a state of charge of the battery;
a maximum capacity of the battery;
state of health data for the battery;
a battery end of life metric;
battery-aerosol provision device pairing information;
heating session data;
number of charging sessions;
charge time data;
Coulomb register data; and
session data for one or more charging sessions and/or aerosol generating sessions.

8. A battery module as claimed in any one of claims 1 to 7, wherein said battery module is removable or replaceable.

9. An aerosol provision device for generating aerosol, the aerosol provision device being connectable to a battery module, the battery module comprising a battery and a data storage medium storing battery data, wherein the aerosol provision device is configured to receive electrical power from the battery of the battery module, and wherein the aerosol provision device comprises:
a controller configured to obtain at least some of said battery data from the battery module.

10. An aerosol provision device as claimed in claim 9, wherein the controller is configured to activate or deactivate said battery module based, at least in part, on said battery data.

11. An aerosol provision device as claimed in claim 9 or claim 10, wherein the controller is configured to derate performance of the battery based, at least in part, on said battery data.

12. An aerosol provision system comprising the aerosol provision device as claimed claim in any one of claims 9 to 11 and the battery module as claimed in any one of claims 1 to 8, wherein the battery module is replaceably attached to the aerosol provision device.

13. A method comprising:
obtaining, by a controller of a battery module, battery data relating to said battery module, wherein the battery module is connectable to an aerosol provision device for generating aerosol; and
storing the obtained battery data in a data storage medium of the battery module.

14. A computer program comprising instructions which, when executed by an apparatus, cause the apparatus to:
obtain battery data relating to a battery module, wherein the battery module is connectable to an aerosol provision device for generating aerosol; and
store the obtained battery data in a data storage medium of the battery module.

15. A kit of parts comprising:
a battery module as claimed in any one of claims 1 to 8; and
an aerosol provision device for generating aerosol.
